# EUROPÄISCHE PATENTSCHRIFT

(11) **EP 3 993 627 B1**
(45) Veröffentlichungstag und Bekanntmachung des Hinweises auf die Patenterteilung: **01.01.2025**
(21) Anmeldenummer: 20743591.8
(22) Anmeldetag: 30.06.2020
(51) Int. Cl.: A01N 59/00, A01N 31/02, A01N 37/16, A01P 1/00, A01P 3/00

(54) **ANWENDUNGSFERTIGES DESINFEKTIONSMITTEL**
READY-TO-USE DISINFECTANT
DÉSINFECTANT PRÊT-À-UTILISER

(30) Priorität: 02.07.2019 DE 102019117861
(43) Veröffentlichungstag der Anmeldung: 11.05.2022
(73) Patentinhaber: Hilaltrade AG, 6331 Hünenberg (CH)
(72) Erfinder: REICHWAGEN, Sven, 27476 Cuxhaven (DE)
(74) Vertreter: Schneiders & Behrendt Bochum
(86) Internationale Anmeldenummer: PCT/EP2020/068409
(87) Internationale Veröffentlichungsnummer: WO 2021/001373

(56) Entgegenhaltungen:
- EP-A1- 1 001 012
- EP-A1- 2 020 180
- EP-A1- 2 724 614
- WO-A1-2015/153258
- DE-U1- 202012 006 847
- US-A1- 2007 258 915
- WILLIAM H. TOLLESON ET AL: "Chemical Inactivation of Protein Toxins on Food Contact Surfaces", JOURNAL OF AGRICULTURAL AND FOOD CHEMISTRY, vol. 60, no. 26, 22 June 2012 (2012-06-22), pages 6627 - 6640, XP055729177, ISSN: 0021-8561, DOI: 10.1021/jf301601v
- GABRIELA LOBINGER: "Merkblatt 15: Eichenprozessionsspinner", 1 August 2018 (2018-08-01), Germany, pages 1 - 4, XP055729197, Retrieved from the Internet <URL:http://www.lwf.bayern.de/mam/cms04/service/dateien/mb15_eichenprozessionsspinner.pdf> [retrieved on 20200909]

## Beschreibung

Die Erfindung betrifft ein anwendungsfertiges Desinfektionsmittel auf Basis von wässrigen Percarbonsäuren. Das erfindungsgemäße Mittel hat bakterizide, viruzide und fungizide Wirksamkeit und kann weiterhin zur Entgiftung von Toxinen eingesetzt werden.

Die Verwendung von Percarbonsäuren zu Desinfektionszwecken ist grundsätzlich bekannt, beispielsweise aus der EP 0 677 990 B1. Insbesondere ist dort die Verwendung von Peressigsäure beschrieben. Das Desinfektionsmittel eignet sich unter anderem zur Behandlung von medizinischen Ausrüstungsgegenständen, beispielsweise Endoskopen.

Die Herstellung von Percarbonsäurelösungen erfolgt durch die Umsetzung der Carbonsäure mit Wasserstoffperoxid in einem wässrigen Medium in Anwesenheit eines Katalysators, üblicherweise Phosphorsäure oder Schwefelsäure. Bei der Reaktion bildet sich ein Gleichgewicht zwischen Percarbonsäuren als Reaktionsprodukt einerseits und den Edukten, also der Carbonsäure und Wasserstoffperoxid, andererseits aus. In der Regel wird das die Percarbonsäure enthaltende Reaktionsgemisch mit einem Lösemittel weiter verdünnt, um die gewünschte niedrige Percarbonsäurekonzentration einzustellen. Regelmäßig wird zur Verdünnung Wasser verwandt. Die Lösungen können Stabilisatoren enthalten, die den Zerfall der Peroxide verlangsamen oder verhindern.

Bei der Verdünnung einer konzentrierten Gleichgewichtslösung der Percarbonsäuren mit Wasser verändert sich der Gleichgewichtspunkt des Systems zugunsten der Regenerierung der ursprünglichen Reaktanten, wobei auch diese Gleichgewichtseinstellung einen längeren Zeitraum in Anspruch nehmen kann. Entsprechend handelt es sich bei der verdünnten Percarbonsäuren Lösung um eine Lösung veränderlicher Zusammensetzung, die aufgrund der Zersetzung von Wasserstoffperoxid mehr und mehr ihre Wirkung verliert.

Aus der WO 2006/125 657 A2, auf deren Inhalt ausdrücklich Bezug genommen wird, ist ein wässriges Desinfektions- und Entkeimungsmittel bekannt, bei dem Percarbonsäuren durch den Zusatz von Sorbitanestern, insbesondere Tween 20, stabilisiert sind. Diese Methode hat sich als grundsätzlich erfolgreich erwiesen, zumal die Sorbitanester als Tenside die Benetzung von Objekten verbessern. Die WO 2017/137 546 A1, auf die ebenfalls Bezug genommen wird, beschreibt die Verwendung von Polyvinylpyrrolidon (PVP) zur Stabilisierung von Percarbonsäuren und in Kombination mit Sorbitanestern.

Aus der DD 41981 ist eine Mischung aus 33 %igem 1-Propanol mit 0,2 %iger Peressigsäure zur Desinfektion von Oberflächen bekannt. Die Mischung wirkt ausgesprochen schnell gegenüber Polioviren. Die DE 20 2012 006 847 U1 beschreibt Rezepturen für ein Reinigungs- und Desinfektionsmittel auf Basis von Alkohol, organischen Säuren, Peressigsäure, Wasserstoffperoxid und Verdickungsmitteln. Die Rezepturen sind darauf angelegt, auf Oberflächen gut zu haften und eine lange Wirksamkeit zu entfalten.

Die WO 2015/153258 A1 offenbart eine antimikrobielle Zusammensetzung enthaltend Propanol, Peressigsäure, Citronensäure und Wasserstoffperoxid.

Die EP 2 020 180 A1 beschreibt ein Desinfektionsmittel mit Wasserstoffperoxid, Essigsäure, Peressigsäure und Ethanol.

Der Erfindung liegt die Aufgabe zugrunde, ein anwendungsfertiges Desinfektionsmittel mit bakterizider, fungizider und viruzider Wirkung bereitzustellen, das schnell wirkt, benetzte Oberflächen nicht angreift, gut körperverträglich ist und damit in der Lebensmittelindustrie, im medizinischen und im Pflegebereich einsetzbar ist.

Diese Aufgabe wird mit einem Mittel der eingangsgenannten Art gelöst, das Ethanol oder Isopropanol in einer Konzentration von 0,5 bis 1,0 Gew.-%, eine oder mehrere Percarbonsäuren in einer Konzentration von 0,1 bis 5 Gew.-%, eine oder mehrere Carbonsäuren in einer Konzentration von 0,1 bis 5 Gew.-% und Wasserstoffperoxid in einer Konzentration von 0 bis 8 Gew.-% enthält, wobei es Benzoesäure und/ oder Sorbinsäure und/oder deren Peroxyform enthält und wobei die Gesamtkonzentration an Percarbonsäuren und Carbonsäuren 5 Gew.-% nicht übersteigt und wobei die Konzentrationsangaben auf das anwendungsfertige Desinfektionsmittel bezogen sind.

Überraschend wurde gefunden, dass ein geringer Alkoholgehalt im Bereich von 0,5 bis 2,0 Gew-% beschleunigend auf die Wirksamkeit von in wässrigen Medien gelösten Peroxiden wirkt. Diese beschleunigte Wirksamkeit kann darauf zurückgeführt werden, dass Alkohole auch in geringen Konzentrationen Einfluss auf die Tertiärstruktur und Faltung der Hüllproteine von Mikroorganismen nehmen und diese für einen oxidativen Angriff zugänglicher machen. Disulfidbrücken können durch Oxidation leichter aufgebrochen und Thiolgruppen zu Sulfongruppen oxidiert werden. Voraussetzung ist damit das Vorhandensein einer Proteinhülle; Schimmelpilzsporen, die über eine auf Cellulose beruhende Hülle aufweisen, erweisen sich dagegen als weithin resistent.

Das erfindungsgemäße Desinfektionsmittel enthält als Alkohol Ethylalkohol oder Isopropanol. Der bevorzugte Alkoholgehalt liegt bei 1,0 Gew.-%.

Neben Alkohol und Wasser enthält das erfindungsgemäße Desinfektionsmittel ein oder mehrere organische Persäuren in einer Konzentration von 0,1 bis 5 Gew.-%, insbesondere 0,1 bis 2,0 Gew.-%. In der Regel sind außer den Percarbonsäuren noch eine oder mehrere organische Carbonsäuren in einer Konzentration von 0,1 bis 5 Gew.-%, insbesondere 0,1 bis 2,0 Gew.-% vorhanden. Weiterhin kann Wasserstoffperoxid in einer Menge von 0 bis 8 Gew.-% vorhanden sein.

Die Gesamtmenge an organischen Carbonsäuren und Percarbonsäuren darf dabei einen Gesamtgehalt von 5 Gew.-% nicht übersteigen.

Es versteht sich, dass alle Gewichtsprozentangaben und Konzentrationen sich auf die Gesamtmenge des Desinfektionsmittels bezieht.

Für erfindungsgemäße Zwecke kommen grundsätzlich alle Carbonsäuren und ihre Peroxyformen infrage, die in wässrige Lösung gebracht werden können. Dies sind beispielsweise gesättigte und ungesättigte aliphatische sowie aromatische Carbonsäuren mit bis zu 12 C-Atomen, Dicarbonsäuren und Hydroxycarbonsäuren mit bis zu 8 C-Atomen, allein wie auch in Mischung, und die entsprechenden Peroxycarbonsäuren. Bevorzugt ist Essigsäure und ihre Peroxyform.

Benzoesäure wie auch Sorbinsäure wirken, wie auch ihre Peroxyformen, mikrobizid. Multifunktionelle Percarbonsäuren, insbesondere Hydroxycarbonsäuren wie Milchsäure und Zitronensäure, können ebenfalls und mit Vorteil eingesetzt werden.

Es versteht sich, dass im erfindungsgemäßen Desinfektionsmittel ein Gleichgewicht zwischen der jeweiligen organischen Säure und ihrer Peroxyform sowie Wasserstoffperoxid besteht. Die hier angegebene Zusammensetzung bezieht sich nicht auf diese Gleichgewichtseinstellung, sondern auf die für die Herstellung des Desinfektionsmittels verwandten Ausgangsstoffe.

Das erfindungsgemäße Mittel bedarf darüber hinaus grundsätzlich keiner weiteren Zusätze, wenn man von Stabilisatoren und Benetzungshilfen absieht.

Als Stabilisierungsmittel kommen beispielsweise Sorbitanester, insbesondere Tween 20, infrage. Diese haben sich als effektive Stabilisatoren für sowohl Percarbonsäuren als auch Wasserstoffperoxid erwiesen. Zudem wirken Sorbitanester als Benetzungshilfen (Tenside). In der Regel ist eine Konzentration von 0,5 bis 2,0 Gew.-% voll ausreichend.

Als Stabilisierungsmittel kommend ferner Polyvinylpyrrolidone in Frage. Bevorzugt sind solche mit einem mittleren Molekulargewicht im Bereich von 10.000 bis 360.000 Dalton. PVP mit einem mittleren Molekulargewicht (Gewichtsmittel) von 15.000 und insbesondere 40.000 Dalton (Povidon K 30) haben sich als sehr geeignet erwiesen. Eine Konzentration von 1,0 bis 5,0 Gew.-% ist in der Regel ausreichend.

Sorbitanester und Polyvinylpyrrolidone, wie oben angegeben, können auch miteinander kombiniert werden.

Erfindungsgemäß erlaubt die Verwendung einer geringen Konzentration an Alkohol, insbesondere Ethanol, eine niedrige Dosierung der Percarbonsäuren. Für die meisten Einsatzzwecke reicht eine Konzentration um 1 Gew.-% aus. In der Regel wird zunächst ein Konzentrat hergestellt, das über eine Percarbonsäurekonzentration zwischen 10 und 20 Gew.-% verfügt, dessen Konzentration anschließend durch Verdünnung mit Wasser herabgesetzt wird.

Das erfindungsgemäße Mittel hat neben seiner starken mikrobiziden Wirkung auch eine gute Wirkung gegenüber proteinhaltigen Toxinen. Diese werden durch den aktiven Sauerstoff des Mittels denaturiert und damit entgiftet. Dies ist beispielsweise gegenüber den Toxinen des Eichenprozessionsspinners der Fall. Bei hinreichender Konzentration der Percarbonsäuren werden im Übrigen auch die Raupen abgetötet.

Die Verwendung von zwei oder mehr Percarbonsäuren hat sich als vorteilhaft erwiesen, da die Mikroorganismen unterschiedliche Empfindlichkeiten aufweisen. Unterschiedliche Percarbonsäuren eignen sich für unterschiedliche Zwecke. Beispielsweise werden eine Reihe von Toxinen, sowohl Mykotoxine, Exotoxine als auch Endotoxine, die über eine Aldehyd- oder Ketofunktion verfügen, effektiv mittels Perbenzoesäure über eine Baeyer-Villiger-Oxidation zerstört. Perbenzoesäure ist gegen Aflatoxine einsetzbar und wirkt als Katalasehemmer. Peressigsäure wiederum ist geeignet, die Porenproteine von Bakterien effektiv anzugreifen, während Perzitronensäure sich als für den Abbau von Biofilmen besonders geeignet erwiesen hat. Die Gegenwart geringer Mengen Alkohols ist überraschenderweise geeignet, diese Reaktionen deutlich zu beschleunigen, da dadurch die Hüllproteine der Mikroorganismen für die Oxidation besser zugänglich werden.

Es ist ferner überraschend, dass die Verwendung höherer Alkoholkonzentrationen von 30 Gew.-% nicht in der Lage ist, die Wirksamkeit einer Percarbonsäurelösung zu erhöhen oder zu beschleunigen. Die Verwendung geringer Alkoholmengen im erfindungsgemäßen Desinfektionsmittel bietet also gegenüber der alkoholfreien Variante wie auch gegenüber der alkoholreichen Variante deutliche Vorteile.

Falls erforderlich, kann das erfindungsgemäße Mittel übliche Zusatzstoffe enthalten, insbesondere weitere Lösemittel, Sequestrierungsmittel, pH-Regulatoren, Korrosionsinhibitoren, Komplexbildner, Entschäumungsmittel, Farb- und Duftstoffe. Es versteht sich, dass alle diese Zusatzstoffe gegenüber Percarbonsäuren stabil sein müssen und auch den Zerfall der Percarbonsäuren nicht fördern dürfen.

Der pH-Wert des erfindungsgemäßen Mittels sollte im sauren Bereich liegen, beispielsweise im Bereich von 3,5 bis 6,0. Percarbonsäuren wie auch Wasserstoffperoxid neigen im alkalischen Bereich zum Zerfall.

Das erfindungsgemäße Mittel kann im Haushalt, im medizinischen Bereich, im Pflegebereich wie auch in der Landwirtschaft eingesetzt werden. Ein Anwendungsbereich ist die Desinfektion von Wunden, ein weiterer die Behandlung von Pilzerkrankungen bei Menschen, Tieren und Pflanzen.

Die Erfindung wird durch die nachfolgenden Beispiele näher erläutert.

### Beispiel 1

Aus einem Konzentrat wurde eine anwendungsfertige Desinfektionslösung mit der folgenden Zusammensetzung pro 100 ml hergestellt:
0,10 g Benzoesäure
0,10 g Sorbinsäure
4,49 g Wasserstoffperoxid
0,50 g Peressigsäure
1,00 g Ethanol
Rest Wasser

Die Desinfektionslösung hatte einen pH-Wert von 3,66.

### Beispiel 2 (Vergleich)

Aus dem gleichen Konzentrat wurde eine Desinfektionslösung hergestellt, deren Alkoholgehalt 30 Gew.-% betrug. Der pH-Wert wurde zu 4,12 bestimmt.

### Beispiel 3 (Vergleich)

Aus dem Konzentrat von Beispiel 1 wurde eine Desinfektionslösung hergestellt, die keinen Alkohol enthielt.

Die erhaltenen Desinfektionslösungen aus den Beispielen 1 bis 3 wurden an Mikroorganismen getestet. Dazu wurden die Desinfektionslösungen unverdünnt und den verschiedenen Verdünnungen mit den in Wasser suspendierten Mikroorganismen versetzt. Nach definierter Einwirkungszeit wurde verbliebenes Peroxid mit Thiosulfatlösung zerstört und ein Aliquot der Lösung auf eine Microtiterplatte gegeben. Bestimmt wurde die logarithmische Reduktion der Mikroorganismen gegenüber dem Nullwert. Die Ergebnisse sind in der anliegenden Tabelle angegeben.

Erstaunlicherweise ist eine erfindungsgemäße Lösung mit 1 Gew.-% Ethanol auch in geringen Konzentrationen gegenüber E. hirae deutlich schneller wirksam als die Vergleichslösungen. Bei der Hefe C. albicans ergibt sich gegenüber der alkoholreichen Lösung eine vergleichbare Reduktion, gegenüber der alkoholfreien Lösung eine deutliche Beschleunigung. Bei den Schimmelpilzsporen von A. brasiliensis (niger) erweist sich die alkoholreiche Lösung aufgrund ihres Alkoholgehalt als schneller wirksam, die alkoholfreie Lösung ist aber auch hier weniger schnell wirksam.

**Tabelle**

| | | 1% RTU | 1% Ethanol | | | | | 30% RTU | 30% Ethanol | | | | | 0% RTU | 0% Ethanol | |
|---|---|---|---|---|---|---|---|---|---|---|---|---|---|---|---|---|
| pH | 100% | 3,66 | | | | pH | 100 % | 4,12 | | | | pH | 100 % | 4,54 | | |
| | | | | | | | | | | | | | | | | |
| | | | | | | | | | | | | | | | | |
| | | | | | | | | | | | | | | | | |
| | | 30s | 60s | 300 s | | | | 30s | 60s | 300s | | | | 30s | 60s | 300s : |
| E. hirae | 97 % | 4,41 | 5,48 | 6,02 | | E. hirae | 97 % | | 6,02 | 6,02 | | E. hirae | 97 % | 0,00 | 0,00 | 5,49 |
| | 80 % | 5,30 | 6,02 | 6,02 | | | 80 % | 0,00 | 6,02 | 6,02 | | | 80 % | 0,00 | 0,00 | |
| | 50 % | 3,56 | 5,69 | 6,02 | | | 50 % | 0,00 | 0,00 | 6,02 | | | 50 % | 0,00 | 0,00 | 5,49 |
| | 10 % | 0,00 | 3,35 | 3,35 | | | 10 % | 0,00 | 0,00 | 0,00 | | | 10 % | 0,00 | 0,00 | 5,49 |
| | | | | | | | | | | | | | | | | |
| C. albicans (Hefe) | 97 % | 4,40 | | | | C. albicans | 97 % | 4,40 | | 4,40 | | C. albicans | 97 % | 0,00 | | 4,39 |
| | 80 % | 4,40 | | | | | 80 % | 4,40 | | 4,40 | | | 80 % | | | |
| | 50 % | 4,23 | | | | | 50 % | 4,40 | | 4,40 | | | 50 % | 0,00 | | 4,39 |
| | | | | | | | | | | | | | | | | |
| A. brasiliensis (Pilzspore) | 97 % | 4,02 | | 4,54 | | A. brasiliensis | 97 % | 4,54 | | 4,54 | | A. brasiliensis | 97 % | 0,00 | | 4,68 |
| | 80 % | 3,16 | | 4,54 | | | 80 % | 4,54 | | 4,54 | | | 80 % | | | |
| | 50 % | 0,00 | | 4,37 | | | 50 % | 3,67 | | 4,54 | | | 50 % | 0,00 | | 4,68 |
| | 10 % | 0,00 | | 0,00 | | | 10 % | 0,00 | | 0,00 | | | 10 % | | | |

## Patentansprüche

1. Anwendungsfertiges Desinfektionsmittel, enthaltend
Ethanol oder Isopropanol in einer Konzentration von 0,5 bis 1,0 Gew.-%, eine oder mehrere Percarbonsäuren in einer Konzentration von 0,1 bis 5 Gew.-%, eine oder mehrere Carbonsäuren in einer Konzentration von 0,1 bis 5 Gew.-%, Wasserstoffperoxid in einer Konzentration von 0 bis 8 Gew.-%, wobei es Benzoesäure und/oder Sorbinsäure und/oder deren Peroxyform enthält und wobei die Gesamtkonzentration an Percarbonsäuren und Carbonsäuren 5 Gew.-% nicht übersteigt und wobei die Konzentrationsangaben auf das anwendungsfertige Desinfektionsmittel bezogen sind.

2. Desinfektionsmittel nach Anspruch 1, **dadurch gekennzeichnet, dass** es Wasserstoffperoxid in einer Konzentration von etwa 5 Gew.-% enthält.

3. Desinfektionsmittel nach Anspruch 1 oder 2, **dadurch gekennzeichnet, dass** es Peressigsäure enthält.

4. Desinfektionsmittel nach Anspruch 3, **dadurch gekennzeichnet, dass** es 0,1 bis 1,0 Gew.-% Peressigsäure enthält.

5. Desinfektionsmittel nach einem der vorstehenden Ansprüche, **dadurch gekennzeichnet, dass** es ein Stabilisierungsmittel und/oder ein Tensid enthält.

6. Desinfektionsmittel nach Anspruch 5, **dadurch gekennzeichnet, dass** es einen Sorbitanestern enthält.

7. Desinfektionsmittel nach Anspruch 5 oder 6, **dadurch gekennzeichnet, dass** es ein Polyvinylpyrrolidon enthält.

## Claims

1. Ready-to-use disinfectant containing
ethanol or isopropanol in a concentration of 0.5 to 1.0 wt.%,
one or more percaboxylic acids in a concentration of 0.1 to 5 wt.%,
one or more carboxylic acids in a concentration of 0.1 to 5 wt.%,
hydrogen peroxide in a concentration of 0 to 8 wt.%,
wherein it contains benzoic acid and/or sorbic acid and/or their peroxy form and wherein the total concentration of percarboxylic acids and carboxylic acids does not exceed 5 wt.% and wherein the concentration data are related to the ready-to-use disinfectant.

2. Disinfectant according to claim 1, **characterized in that** it contains hydrogen peroxide in a concentration of about 5 wt.%.

3. Disinfectant according to claim 1 or 2, **characterized in that** it contains peracetic acid.

4. Disinfectant according to claim 3, **characterized in that** it contains 0.1 to 1.0 wt.% of peracetic acid.

5. Disinfectant according to any one of the preceding claims, **characterized in that** it contains a stabilizing agent and/or a surfactant.

6. Disinfectant according to claim 5, **characterized in that** it contains a sorbitan ester.

7. Disinfectant according to claim 5 or 6, **characterized in that** it contains a polyvinylpyrrolidone.

## Revendications

1. Désinfectant prêt-à-utiliser contenant
de l'éthanol ou de l'isopropanol à une concentration de 0,5 à 1,0 % en poids, un ou plusieurs acides percaboniques à une concentration de 0,1 à 5 % en poids,
un ou plusieurs acides carboxyliques à une concentration de 0,1 à 5 % en poids,
du peroxyde d'hydrogène à une concentration de 0 à 8 % en poids,
dans lequel il contient de l'acide benzoïque et/ou de l'acide sorbique et/ou leur peroxyforme et dans lequel la concentration totale en acides percarboxyliques et en acides carboxyliques ne dépasse pas 5 % en poids et dans lequel les indications de concentration se rapportent au désinfectant prêt-à-utiliser.

2. Désinfectant selon la revendication 1, **caractérisé en ce qu'**il contient du peroxyde d'hydrogène à une concentration d'environ 5 % en poids.

3. Désinfectant selon la revendication 1 ou 2, **caractérisé en ce qu'**il contient de l'acide peracétique.

4. Désinfectant selon la revendication 3, **caractérisé en ce qu'**il contient de 0,1 à 1,0 % en poids d'acide peracétique.

5. Désinfectant selon l'une quelconque des revendications précédentes, **caractérisé en ce qu'**il contient un agent stabilisant et/ou un agent tensioactif.

6. Désinfectant selon la revendication 5, **caractérisé en ce qu'**il contient un ester de sorbitan.

7. Désinfectant selon la revendication 5 ou 6, **caractérisé en ce qu'**il contient une polyvinylpyrrolidone.
